# EUROPEAN PATENT APPLICATION

(11) **EP 1 882 980 A1**
(43) Date of publication of application: **30.01.2008**
(21) Application number: 07014314.4
(22) Date of filing: 20.07.2007
(51) Int. Cl.: G02F 1/167

(54) **Electrophoretic display device**

(30) Priority: 26.07.2006 KR 20060070234
(71) Applicant: Samsung Electronics Co., Ltd., Suwon-si 442-742 Gyeonggi-do (KR)
(72) Inventor: Roh, Nam Seok, Bundang-gu Seongnam-si Gyeonggi-do (KR)
(74) Representative: Weitzel, Wolfgang

(57) **Abstract**

An electrophoretic display device (1) which operates in a reflective display mode and a transmissive display mode adaptive to ambient light comprises a first substrate (10) having a first electrode (12), a second substrate (20) facing the first substrate and having a second electrode (22), a pair of spacers (30) interposed between the first and second substrates for defining a cell, an insulation fluid (40) filling the cell, first colored charged particles (50) and second colored charged particles (60) dispersed in the insulation fluid, a backlight unit (70) installed at an exterior side of the second substrate, and a backlight mode driving unit (80) for attracting the first colored charged particles and the second colored charged particles to the spacers in opposite directions, respectively when the backlight unit turns on.

## Description

### REFERENCE TO RELATED APPLICATIONS

This application claims priority of Korean patent application 2006-70234, filed on July 26, 2006, the entire disclosure of which is incorporated herein by reference.

### BACKGROUND OF THE INVENTION

### Field of the invention

The present invention relates to an electrophoretic display and, in particular, to an electrophoretic display device which operates in a reflective display mode and a transmissive display mode adaptive to the ambient light environment.

### Description of the Related Art

An electrophoretic display device is an information display that forms visible images by rearranging charged pigment particles using an applied electric field. Electrophoresis is the movement of an electrically charged substance under the influence of an electric field.

Typically, the electrophoretic display device includes a pair of electrodes facing each other with a dispersion liquid between the electrodes. The dispersion liquid includes an insulating liquid having charged electrophoretic particles dispersed therein. To display an image, the electrophoretic particles are moved by an applied electric field to one of the pair of electrodes having an electric polarity opposite to that of the electrophoretic particles. A background color that contrasts with the electrophoretic particle is carried by the insulating liquid including white-colored charged particles.

The electrophoretic display device has several advantages, such as low power consumption, high contrast, and wide viewing angle. For these reason, it is expected that the electrophoretic display device will be widely utilize in the future.

However, since the electrophoretic display device is a full reflective display device, the display performance abruptly degraded in a dark ambient light environment.

### SUMMARY OF THE INVENTION

The present invention provides an electrophoretic display device which is capable of operating in a reflective display mode when in a bright ambient light environment and in a backlight display mode when in a dark ambient light environment.

In accordance with one aspect of the present invention, an electrophoretic display device comprises a first substrate having a first electrode, the first substrate and the first electrode being transparent; a second substrate facing the first substrate and having a second electrode, the second substrate and the second electrode being transparent; a pair of spacers interposed between the first and second substrates for defining a cell; an insulation fluid filled out the cell; first colored charged particles dispersed in the insulation fluid, the first colored charged particles having a predetermined polarity; second colored charged particles dispersed in the insulation fluid, the second colored charged particles having a polarity opposing the polarity of the first colored charged particles; a backlight unit installed at an exterior side of the second substrate for emitting light to the second substrate; and a backlight mode driving unit for attracting the first colored charged particles and the second colored charged particles, when the backlight unit turns on, to the spacers in opposite directions, respectively.

Preferably, the backlight mode driving unit includes a first backlight mode electrode formed on an inner wall of one of the spacers and a second backlight mode electrode formed on an inner wall of the other spacer, wherein the first and second backlight mode electrodes are supplied with voltages having opposite polarities to each other when the backlight unit turns on and are released from the voltages having opposite polarities to each other when the backlight unit is deactivated.

Preferably, the backlight mode driving unit includes a first backlight mode electrode arranged at an end of a first spacer and a second backlight mode electrode arranged at an end of a second spacer, wherein the first and second backlight mode electrodes have opposite polarity voltages applied to each other.

Preferably, the first backlight mode electrode is arranged near one end of the second electrode and the second backlight mode electrode is arranged near the other end of the second electrode.

Preferably, the first and second backlight mode electrodes are supplied with voltages having identical polarity when the backlight unit is deactivated.

Preferably, the first and second backlight mode electrodes are arranged horizontally in parallel with the second electrode and overlap both ends of the second electrode.

Preferably, the spacers comprise a transparent material.

Preferably, the electrophoretic display device further includes light blocking members formed at the areas where the first and second substrates contact the spacers.

In accordance with another aspect of the present invention, an electrophoretic display device comprises a first transparent substrate having a first transparent electrode; a second transparent substrate having a second transparent electrode, the second transparent substrate facing the first transparent substrate; a pair of spacers interposed between the first and second transparent substrates for defining a cell; first colored insulation fluid filling the cell; second colored charged particles dispersed in the insulation fluid, the second colored charged particles having a predetermined polarity; a backlight unit installed at an exterior side of the second substrate for emitting light to the second transparent substrate; and a backlight mode driving unit for attracting the second colored charged particles to the spacers when the backlight unit turns on.

Preferably, the backlight mode driving unit includes a first backlight mode electrode formed on an inner wall of one of the spacers and a second backlight mode electrode formed on an inner wall of the other spacer, wherein the first and second backlight mode electrodes are supplied with voltages having opposite polarities to each other when the backlight unit turns on and are released from the voltages having opposite polarities to each other when the backlight unit is deactivated.

Preferably, the backlight mode driving unit includes a first backlight mode electrode arranged at one end of a first spacer and a second backlight mode electrode arranged at one end of a second spacer, wherein the first and second backlight mode electrodes are supplied with voltages having opposite polarities to each other.

Preferably, the first backlight mode electrode is arranged near an end of the second electrode and the second backlight mode electrode is arranged near the other end of the second electrode.

Preferably, the first and second backlight mode electrodes are supplied with voltages having identical polarity when the backlight unit is deactivated.

Preferably, the first and second backlight mode electrodes are arranged horizontally in parallel with the second electrode and overlap both ends of the second electrode, respectively.

Preferably, the spacers comprise a transparent material.

Preferably, the electrophoretic display device further includes light blocking members formed at areas where the first and second substrates contact the spacers.

In accordance with another aspect of the present invention, an electrophoretic display comprises a first transparent substrate having a first transparent electrode; a second transparent substrate having a second transparent electrode, the second transparent substrate facing the first transparent substrate; a plurality of capsules arranged between the first and second transparent substrates; insulation fluid filling the capsules; first colored charged particles having a predetermined polarity and dispersed in the insulation fluid; second colored charged particles having a polarity opposing the polarity of the first colored charged particles and dispersed in the insulation fluid; a backlight unit installed at an exterior side of the second substrate for emitting light to the second substrate; and a backlight mode driving unit for attracting the first colored charged particles and the second colored charged particles when the backlight unit turns on to the spacers in opposite directions, respectively.

Preferably, the backlight mode driving unit includes a first backlight mode electrode formed at exterior side of one of the first and second substrates and a second backlight mode electrode formed at regular intervals on a same horizontal line with the first backlight mode electrode, wherein the first and second backlight mode electrodes are supplied with voltages having opposite polarities to each other.

Preferably, the first backlight mode electrode is arranged near one end of the second transparent electrode and the second backlight mode electrode is arranged near the other end of the second transparent electrode.

Preferably, the electrophoretic display device of claim 19, wherein the first and second backlight mode electrodes are released from the voltages having opposite polarities to each other when the backlight unit is deactivated.

Preferably, the first and second backlight mode electrodes are supplied with voltages having identical polarity when the backlight unit is deactivated.

Preferably, the first and second backlight mode electrodes are arranged horizontally in parallel with the second electrode and overlap both ends of the second electrode, respectively.

In accordance with another aspect of the present invention, an electrophoretic display comprises a first transparent substrate having a first transparent electrode; a second transparent substrate having a second transparent electrode, the second transparent substrate facing the first transparent substrate; a plurality of capsules arranged between the first and second transparent substrates; first colored insulation fluid filling capsules; second colored charged particles having a predetermined polarity and dispersed in the insulation fluid; a backlight unit installed at an exterior side of the second substrate for emitting light to the second substrate; and a backlight mode driving unit for attracting the second colored charged particles to both sides of the capsules, when the backlight unit turns on.

Preferably, the backlight mode driving unit includes a first backlight mode electrode formed at an exterior side of one of the first and second transparent substrates and a second backlight mode electrode formed at regular intervals on a same horizontal line with the first backlight mode electrode, wherein the first and second backlight mode electrodes are supplied with voltages having opposite polarities to each other.

Preferably, the first electrode is arranged near an end of the second transparent electrode and the second backlight mode electrode is arranged near the other end of the second transparent electrode.

Preferably, the electrophoretic display device of claim 24, wherein the first and second backlight mode electrodes are released from the voltages having opposite polarities to each other when the backlight unit is deactivated.

Preferably, the first and second backlight mode electrodes are supplied with voltages having identical polarity when the backlight unit is deactivated.

Preferably, the first and second backlight mode electrodes are arranged horizontally in parallel with the second electrode and overlap both ends of the second electrode, respectively.

### BRIEF DESCRIPTION OF THE DRAWINGS

The above and other objects, features and advantages of the present invention will be more apparent from the following detailed description in conjunction with the accompanying drawings, in which:

FIG. 1 is a cross sectional view illustrating an electrophoretic display device according to an exemplary embodiment of the present invention;

FIGs. 2A and 2B are cross sectional views illustrating reflective display mode operations of the electrophoretic display device of FIG. 1;

FIG. 2C is a cross sectional view illustrating an backlight display mode operation of the electrophoretic display device of FIG. 1;

FIG. 3 is a cross sectional view illustrating an electrophoretic display device according to another exemplary embodiment of the present invention;

FIG. 4 is a cross sectional views illustrating reflective display mode operations of the electrophoretic display device of FIG. 3;

FIG. 5 is a cross sectional view illustrating an backlight display mode operation of the electrophoretic display device of FIG. 3;

FIG. 6 is a cross sectional view illustrating an electrophoretic display device according to another exemplary embodiment of the present invention;

FIGs. 7A and 7B are cross sectional views illustrating reflective display mode operations of the electrophoretic display device of FIG. 6;

FIG. 7C is a cross sectional view illustrating an backlight display mode operation of the electrophoretic display device of FIG. 6;

FIG. 8 is a cross sectional view illustrating an electrophoretic display device according to another exemplary embodiment of the present invention;

FIGs. 9A and 9B are cross sectional views illustrating reflective display mode operations of the electrophoretic display device of FIG. 8;

FIG. 9C is a cross sectional view illustrating an backlight display mode operation of the electrophoretic display device of FIG. 8;

FIG. 10 is a cross sectional view illustrating an electrophoretic display device according to another exemplary embodiment of the present invention;

FIGs. 11A and 11B are cross sectional views illustrating reflective display mode operations of the electrophoretic display device of FIG. 10; and

FIG. 11C is a cross sectional view illustrating a backlight display mode operation of the electrophoretic display device of FIG. 10.

### DETAILED DESCRIPTION OF PREFERRED EMBODIMENTS

Exemplary embodiments of the present invention are described with reference to the accompanying drawings in detail. The same reference numbers will be used throughout the drawings to refer to the same or like parts. Detailed descriptions of well-known functions and structures incorporated herein may be omitted to avoid obscuring the subject matter of the present invention.

An electrophoretic display device of the present invention has two modes, that is, a reflective display mode using incident light from the outside and transmissive display mode using light emitted from the backlight.

In the reflective display mode, the electrophoretic display device presents an image in non-white and white by reflecting light from the outside in a bright ambient light environment. The reflective display mode is a normal display mode.

In the transmissive display mode, the electrophoretic display device presents an image in black and white by transmitting light emitted from a backlight. That is, the electrophoretic display device can present white by transmitting all the light emitted from the backlight and black by blocking the light emitted from the backlight using particles charged with a predetermined pigments.

### <Embodiment 1 >

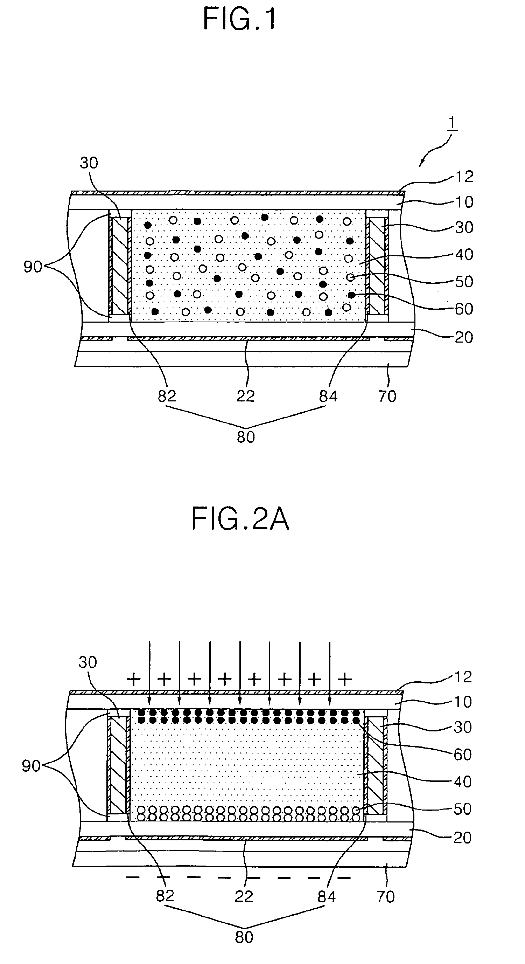

FIG. 1 is a cross sectional view illustrating an electrophoretic display device according to an exemplary embodiment of the present invention.

As shown in FIG. 1, the electrophoretic display device 1 includes a first substrate 10, a second substrate 20, spacers 30, insulation material 40, white-colored charged particles 50, non-white colored charged particles 60, a backlight unit 70, and a backlight mode driving unit 80.

The first substrate 10 comprises a transparent material in the form of a thin film and is provided with a first transparent electrode 12. The first transparent electrode 12 is formed on a whole surface for the first substrate 10 and operates as a common electrode of the electrophoretic display device 1.

The first substrate 10 and the first transparent electrode 12 are implemented with transparent material to allow transmission of the light from the outside or emitted from the backlight unit 70.

The second substrate 20 is arranged to face the first substrate 10 and comprises a transparent material in the form of a thin film. The second substrate 20 is provided with a second transparent electrode 22. The second transparent electrode 22 is patterned to be positions corresponding to the regions defined by the spacers 30, unlike the first transparent electrode 12.

The spacers 30 compartmentalize the space between the first and second substrates 10 and 20. As shown in FIG. 1, the spacers 30 are interposed between the first and second substrate 10 and 20 so as to separate the space into cells. Each cell of the electrophoretic display device 1 is driven independently. That is, each cell is formed with a second transparent electrode 22 and independently operates in the reflective or transmissive display mode.

The insulation material 40 is a material filling out the cell formed by the first and second substrates 10 and 20 and the spacers 30. The insulation material 40 can be liquid or gas and should be transparent for allowing light to transmit. The insulation material 40 also has a dielectric characteristic so as not to be influenced by the electric field.

The white-colored charged particles 50 are distributed in the insulation material 40 and each particle 50 has a predetermined polarity. The white -colored particle 50 has a positive (+) or negative (-) charge and moves in a predetermined direction according to the electric field formed by direct current (DC) voltage applied across the first and second substrate 10 and 20 through the first and second transparent electrodes 12 and 22, respectively. For example, if positively charged, the white-colored charged particles 50 migrate to the first electrode 12 to which a voltage of the opposite polarity, i.e. the negative charge, is applied. The particles 50 reflect the incident light from the outside in whole. In this case, the electrophoretic display 1 appears white color.

The non-white colored charged particles 60 are dispersed in the insulation material 40 and have a polarity opposing that of the white-colored charged particles 50. Accordingly, when the voltage is applied to the first and second substrates 10 and 20 through the first and second transparent electrodes 12 and 22, the non-white colored charged particles 60 move in the other direction. The non-white colored charged particles 60 are dyed by a predetermined color pigment. Typically the non-white colored charged particles 60 are dyed with block or blue color pigment. In order to show a color image, the particles can be colored with various color pigments.

The backlight unit 70 is arranged at a rear side of the second substrate 20 and emits light to the second substrate 20. The backlight unit 70 is turned off when an ambient light is bright enough, and turned on in a dark ambient environment so as to emit the light in a direction to the first and second substrates 10 and 20.

The backlight mode driving unit 80 moves the white-colored charged particles 50 and the non-white colored charged particles 60 to the spacers 30 when the backlight is turned on. If the white-colored charged particles 50 and non-white colored charged particles 60 are arranged between the first and second substrate 10 and 20 when the backlight unit 70 is used due to insufficient ambient light, the light emitted from the backlight unit 70 is blocked by the particles 50 and 60. Accordingly, the backlight mode driving unit 80 moves the white-colored charged particles 50 and the non-white colored charged particles 60 to the spacers 30 so as to allow the light to pass through.

The backlight mode driving unit 80 can be implemented in 2 kinds of structures. Firstly, the backlight mode driving unit 80 includes a first backlight mode electrode 82 and a second backlight mode electrode 84 as shown in FIG. 1. The first and second backlight mode electrodes 82 and 84 are formed on inner surfaces of the spacers 30 opposing each other. If DC voltages of opposite polarity are applied to the first and second backlight mode electrodes 82 and 84, respectively, an electric field is formed in a vertical direction to the electric field formed by the first and second transparent electrodes 12 and 22. The electric field formed by the first and second backlight mode electrodes 82 and 84 makes the white colored charged particles 50 and non-white colored charged particles 60 move to the spacers 30 such that the light emitted from the backlight unit 70 passes through.

Now the reflective display mode and the transmissive mode operations of the electrophoretic display device 1 having the above structured backlight mode driving unit 80 will be described with reference to FIG. 2A through FIG. 2C.

As illustrated in FIG. 2A, in order to present non-white color in the reflective display mode, DC voltage having a polarity opposing that of the non-white colored charged particles 60 is applied to the first substrate 10 such that the non-white colored charged particles 60 migrate to the inner surface of the first substrate 10. Accordingly, the incident light from the outside is reflected by the non-white colored charged particles 60, whereby the color of the non-white colored charged particles 60 appears. At this time, the white-colored charged particles 50 having a polarity opposing the non-white colored charged particles 60 are arranged over an inner surface of the second substrate 20.

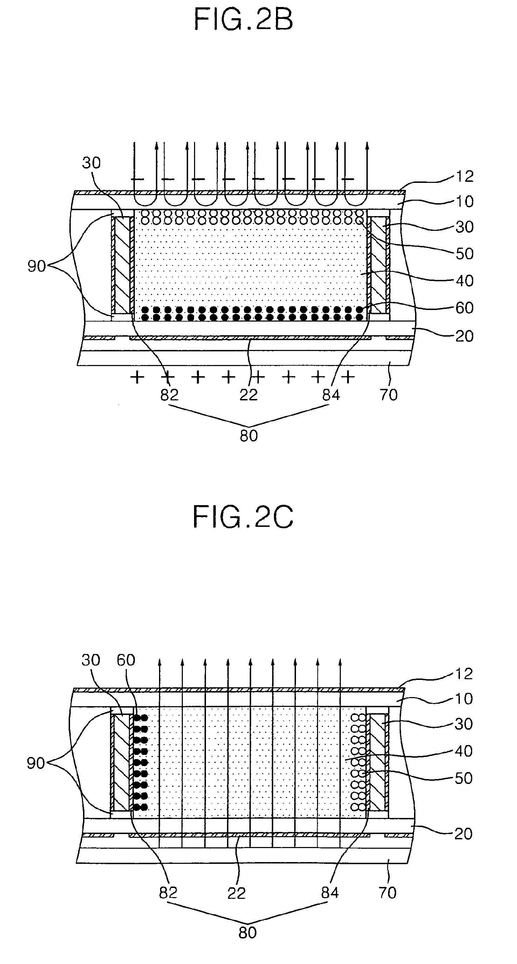

As illustrated in FIG. 2B, in order to present white color in the reflective display mode, DC voltages are applied across the first and second transparent electrodes 12 and 22 such that the first transparent electrode 12 is negatively charged and the second transparent electrode 22 is positively charged, unlike in FIG. 2A. Of course, the backlight unit 70 is not turned on in the reflective display mode.

The white-colored charged particles 50 and the non-white colored charged particles 60 are arranged over inner surfaces of the first and second substrates 10 and 20, respectively. Accordingly, the incident light is reflected by the white-colored charged particles 50, resulting in the appearance of white color.

As illustrated in FIG. 2C, in the transmissive display mode, the voltage applied across the first and second substrate 10 and 20 through the first and second transparent electrode 12 and 22 are released and the backlight unit 70 is turned on such that the DC voltage is applied across the first and second backlight mode electrodes 82 and 84. Thus, white-colored charged particles 50 and the non-white colored charged particles 60 migrate to the backlight mode electrode 82 and 84 to which DC voltage having opposite polarity of the particles 50 and 60 are applied, respectively.

As a result, the non-white colored charged particles 60 are arranged along the first backlight mode electrode 82 and the white-colored charged particles 50 are arranged along the second backlight mode electrode 84. In this case, since the white-colored charged particles 50 and the non-white colored charged particles 60 move to the spacers 30, the light emitted from the backlight unit 70 passes through the second transparent electrode 20, the insulation material 40, and the first substrate 10 in sequential order, resulting in appearance of white color.

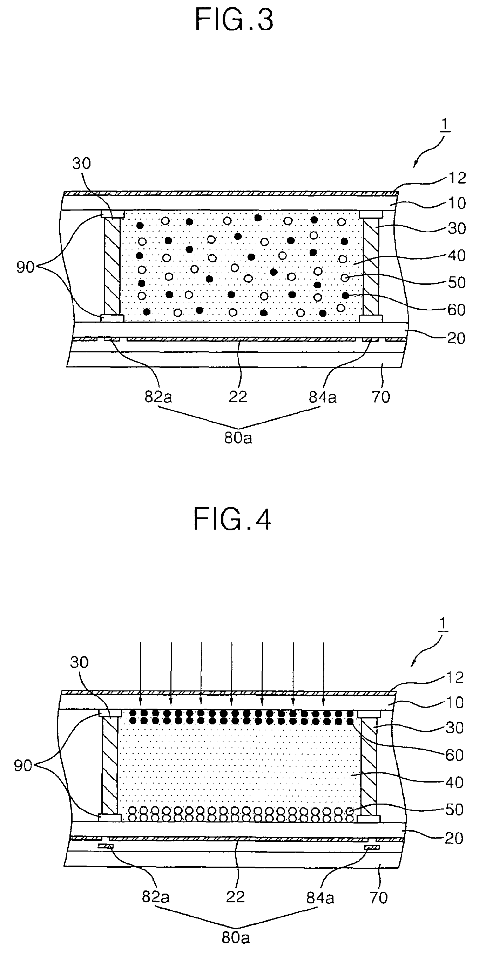

The backlight mode driving unit 80a can be implemented in a second structure. As shown in FIG. 3, the backlight mode driving unit 80a includes a first backlight mode electrode 82a and a second backlight mode electrode 84a that are formed on the second substrate 20 below the spacers 30. The first and second backlight mode electrodes 82a and 84a are supplied with DC voltages of opposite polarity, respectively. In this embodiment, the first and second backlight mode electrodes 82a and 84a are formed on exterior side of one of the first and second substrates 10 and 20 rather than on the spacers 30. Accordingly, the first and second backlight mode electrodes 82a and 84a are arranged along the same horizontal line, i.e. on the same surface of a substrate.

In FIG. 3, the first and second backlight mode electrodes 82a and 84a are arranged at both sides of the second transparent electrode 22. If the electrophoretic display device 1 operates in a reflective display mode, the first and second backlight mode electrodes 82a and 84a are supplied with the DC voltages having an identical polarity of those applied to the second transparent electrode 22. That is, the first and second backlight mode electrodes 82a and 84a operate functions like those of second electrode 22 which moves white-colored charged particles 50 and non-white-colored charged particles 60 to the first substrate 10 or the second substrate 20, resulting in appearance of white color or non-white color for example, black color.

As shown in FIG. 4, the first and second backlight mode electrodes 82a and 84a can be formed at horizontally different depth and overlap both ends of the first and second backlight mod electrodes 82a and 84a with the ends of the second transparent electrode 22 in the second substrate 20.

In the backlight display mode, the voltage applied across the first and second transparent electrodes 10 and 20 are released and the backlight unit 70 is turned on such that DC voltages of the opposite polarity are applied to the first and second backlight mode electrodes 82a and 84a, respectively.

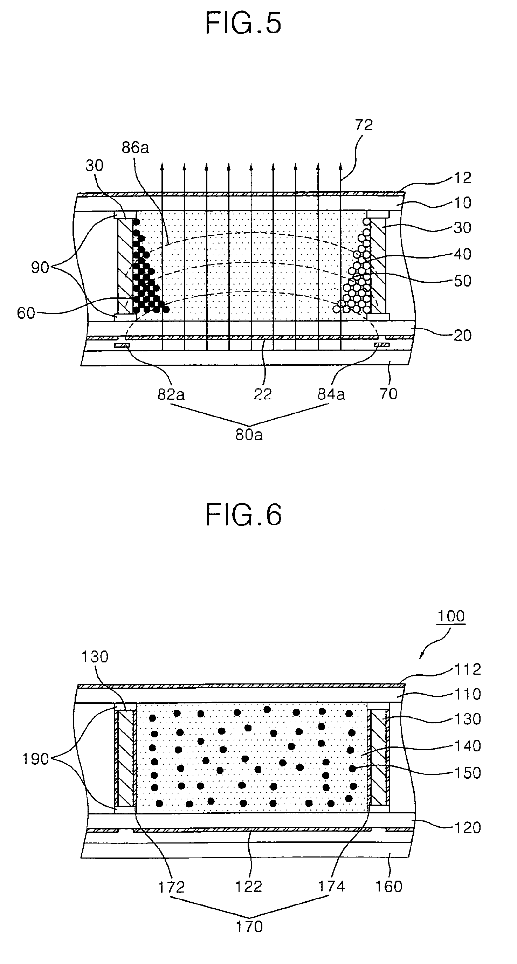

As shown in FIG. 5, if the voltage is applied across the first and second backlight mode electrodes 82a and 84a, the white and non-white colored charged particles 50 and 60 migrate to the spacers 30 around the oppositely charged backlight mode electrodes 82a and 84a along electric line 86a of force. Accordingly, there are no particles 50 and 60 in the middle of the cell such that the light emitted from the backlight unit 70 passes through the cell, resulting in appearance of white color.

In the reflective display mode, the electrophoretic display device operates as in FIGs. 2A and 2B.

Preferably, as illustrated in FIGs. 1 through 3, a light blocking layer 90 is formed between the first and second substrates 10 and 20 and the spacers 30. When the electrophoretic display device 1 presents non-white color in the backlight display mode, the light emitted from the backlight unit 70 is blocked by the white-colored charged particles 50 or the non-white colored charged particles 60 dispersed in the insulation material 40. When the spacers 30 are made of a transparent material, the light can leak out through the spacers 30. In order to prevent the light from leaking out through the spacers 30, light blocking layers 90 can be formed at an area contacting the first and second substrates 10 and 20 and the spacers 30. Of course, the light blocking layer 90 is preferably made of an opaque material. Also, it is possible to form the spacers 30 with an opaque material for protecting the leakage of the light emitted from the backlight unit 70 rather than to form the light blocking layer 90 with and opaque material.

### <Embodiment 2>

FIG. 6 is a cross sectional view illustrating an electrophoretic display device according to another embodiment of the present invention.

As shown in FIG. 6, the electrophoretic display device 100 includes a first substrate 110, a second substrate 120, spacers 130, insulation material 140, non-white colored charged particles 150, a backlight unit 160, and a backlight mode driving unit 170.

Unlike the first embodiment in which the white-colored charged particles 50 and the non-white colored charged particles 60 are dispersed in the insulation material 40, only the non-white colored charged particles 150 are dispersed in the insulation material 140. Unlike the transparent material 40 used in the first embodiment, the insulation material 140 is colored by white dye.

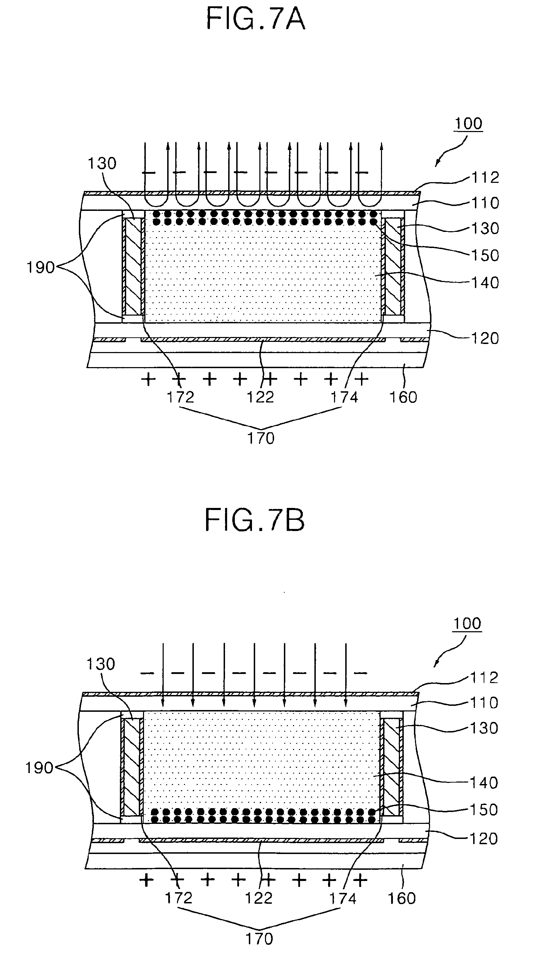

In the first embodiment, the white color appears when the white-colored charged particles 50 are attracted to the first transparent electrode 12 and the non-white color appears when the non-white colored charged particles 60 are attracted to the first transparent electrode 12. In the second embodiment, however, the non-white color appears when the non-white colored charged particles 150 are attracted to the first electrode 112, i.e., when the non-white colored charged particles 1 50 arranged over the first substrate 110 as shown in FIG. 7A. In above descriptions, non-white color appears when the color of the non-white colored charged particles is black.

On the other hand, if the non-white colored charged particles 150 are attracted to the second transparent electrode 120 as shown in FIG. 7B, white color appears at the view side. During the reflective display mode, the backlight unit 160 is not driven such that no voltage is applied across the first and second backlight mode electrodes 172 and 174.

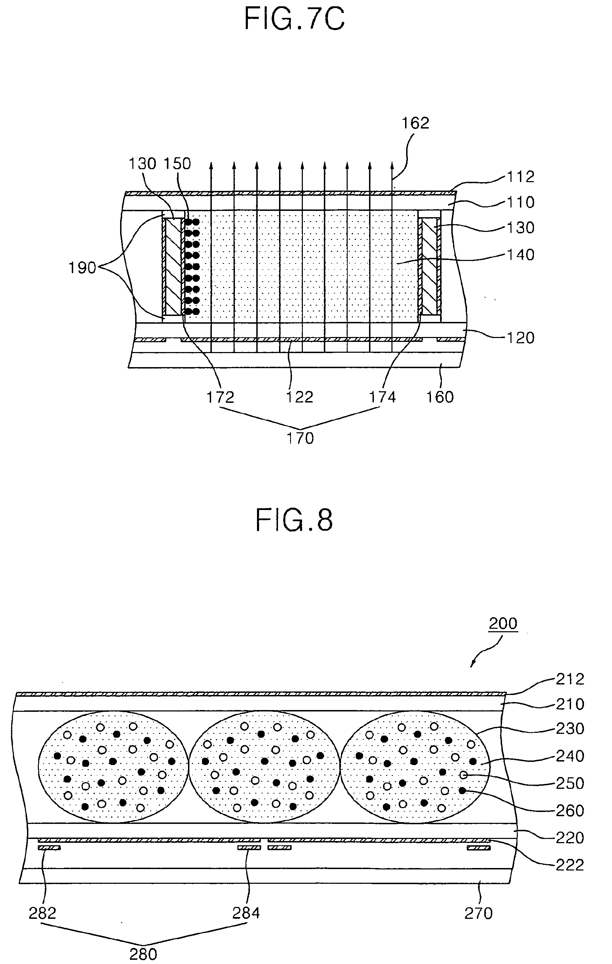

In the backlight display mode, if a voltage is applied across the first and second backlight mode electrodes 172 and 174, the non-white colored charged particles 150 are attracted to one of the first and second backlight mode electrode 172 and 174, having the opposite polarity, respectively. In FIG. 7C, the non-white colored charged particles 1 50 are attracted to the first backlight mode electrode 172 by the electric field formed by the first and second backlight mode electrodes 172 and 174. Accordingly, the light emitted from the backlight unit 160 passes through the empty insulation material 140, resulting in appearance of white color.

Since the first substrate 110, second substrate 120, spacers 130, backlight unit 160, and backlight mode driving unit 170 are structured identical with those in the first embodiment, detailed descriptions are omitted.

### <Embodiment 3>

FIG. 8 is a cross sectional view illustrating an electrophoretic display device according to an exemplary embodiment of the present invention.

As shown in FIG. 8, the electrophoretic display device 200 includes a first substrate 210, a second substrate 220, capsules 230, insulation material 240, white-colored charged particles 250, non-white colored charged particles 260, a backlight unit 270, and a backlight mode driving unit 280. On exterior surfaces of the first and second substrates 210 and 220, first and second transparent electrodes 212 and 222 are formed, respectively.

In this embodiment, the structures and functions of the first and second substrates 210 and 220 are identical with those of the first embodiment, and thus detailed descriptions are omitted.

Unlike the first and second embodiments, the electrophoretic display device 200 according to the third embodiment of the present invention includes a plurality of capsules 230. Each capsule 230 is filled with the insulation material 240 containing the white-colored charged particles 250 and the non-white colored charged particles 260. The white-colored charged particles 250 and the non-white colored charged particles 260 move to the first and second substrates 210 and 220 in each capsule 230 according to the electric field formed by the first and second transparent electrodes 212 and 222 so as to appear a white or non-white color. The second transparent electrode 222 may be not formed for respective capsules 230. The second transparent electrode 222 can be implemented larger than a capsule 230, as illustrated in FIG. 8.

In this embodiment, the capsules are utilized for preventing the particles 250 and 260 from settling down unlike the first and second embodiments in which the cells are directly filled with the insulation material containing the charged particles.

In the case of using the capsules, no spacers are required between the first and second substrates 210 and 220, since the capsules 230 make the roles of the spacers for securing the cells.

The insulation material 240, the white-colored charged particles 250, the non-white colored charged particles 260, and the backlight unit 270 are structured and functioning in the same manner of those in the first and second embodiments. Accordingly, detailed descriptions on these elements are omitted.

The backlight mode driving unit 280 includes first and second backlight mode electrodes 282 and 284. The first and second backlight mode electrodes 282 and 284 are formed on exterior of the first substrate 210 or the second substrate 220 at regular intervals on a same horizontal line. In FIG. 8, the first and second backlight mode electrodes 282 and 284 are formed in the second substrate 284 as an example.

DC voltages of the opposite polarity are applied to the first and second backlight mode electrodes 282 and 284 respectively such that the white-colored charged particles 250 and the non-white colored charged particles 260 move to side walls of the capsules 230.

Even though the first and second backlight mode electrodes 282 and 284 are arranged in horizontally parallel with the second transparent electrode 222 in this embodiment, the first and second backlight mode electrodes 282 and 284 are formed in horizontally in series as in the first embodiment.

The operation of the electrophoretic display device 200 in the reflective display mode is described hereinafter.

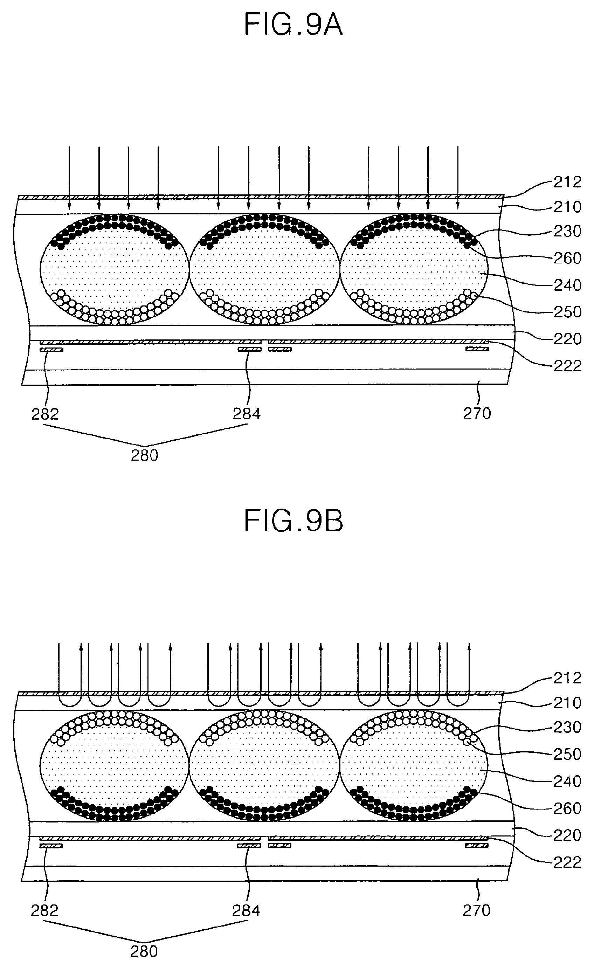

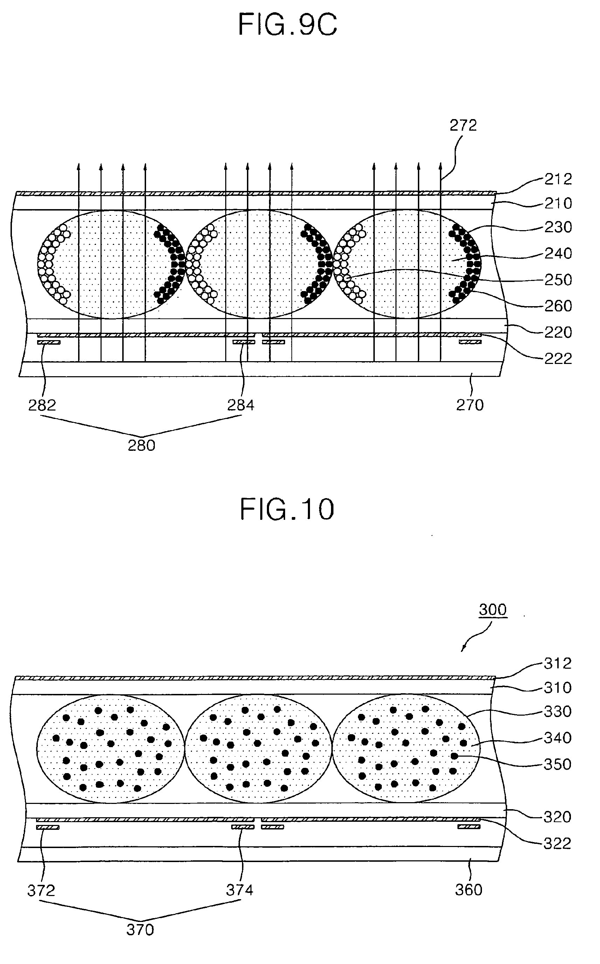

As illustrated in FIG. 9A, in order to present black display in the reflective display mode, a DC voltage is applied across the first and second transparent electrodes 210 and 220 while the backlight unit 270 is deactivated.

If a voltage is applied across first and second transparent electrodes 212 and 222, the non-white colored charged particles 260 are attracted to the first transparent electrode 212 in the capsules 230 and the white-colored charged particles 250 are attracted to the second transparent electrode 222, supplied with voltages of opposite polarity, respectively. As a result, the non-white colored charged particles 260 are arranged on top walls of the capsules 230 and the white charged particle 250 are arranged on bottom walls of the capsules 230. That is, the non-white colored charged particles 260 are arranged right below the first substrate 210 such that the incident light is reflected by the non-white colored charged particles 260, resulting in appearance of non -white color.

As illustrated in FIG. 9B, in order to present white color in the reflective display mode, DC voltages are applied across the first and second transparent electrodes 212 and 222 such that the first and second electrodes 212 and 222 are supplied with the voltages of polarity opposite to those applied for appearing non-white color. In this case, the white-colored charged particles 250 are attracted to the first transparent electrode 212 to be arranged on the top walls of the capsules 230 and the non-white colored charged particles 260 are attracted to the second transparent electrode 222 to be arranged on the bottom walls of the capsules 230. The incident light is reflected by the white-colored charged particles 250 arranged right below the first substrate 210, resulting in appearance of white color.

In the backlight display mode, the voltage is applied across the first and second backlight mode electrodes 282 and 284, while the voltage applied across the first and second transparent electrodes 212 and 222 is released. If the voltage is applied across the first and second backlight mode electrodes 282 and 284, the white-colored charged particles 250 and the non-white colored charged particles 260 are attracted to the first and second backlight mode electrodes 282 and 284, such that the white-colored charged particles 250 and the non-white colored charged particles 260 are moved to opposite sidewalls of each capsule 230. Accordingly, the light emitted from the backlight unit 270 can pass through the empty insulation material 240 contained in capsules 230, resulting in appearance of white color.

### <Embodiment 4>

FIG. 10 is a cross sectional view illustrating an electrophoretic display device according to an exemplary embodiment of the present invention.

As shown in FIG. 10, the electrophoretic display device 300 includes a first substrate 310, a second substrate 320, capsules 330, insulation material 340, non-white colored charged particles 350, a backlight unit 360, and a backlight mode driving unit 370. Since the structures and functions of the first and second substrates 310 and 320, capsules 330, backlight unit 360, and backlight mode driving unit 370 are identical with those of the third embodiment, detailed descriptions of these elements are omitted.

In this embodiment, unlike the third embodiment in which white-colored charged particles and non-white-colored charged particles move to opposite direction respectively to appear the white and non-white colors, only the non-white colored charged particles 350 are dispersed in the insulation material 340 contained in the capsules 330.

In the fourth embodiment of the present invention, the insulation material 340 is dyed in white color such that it is possible to appear the white and non-white colors by moving the non-white colored charged particles 350.

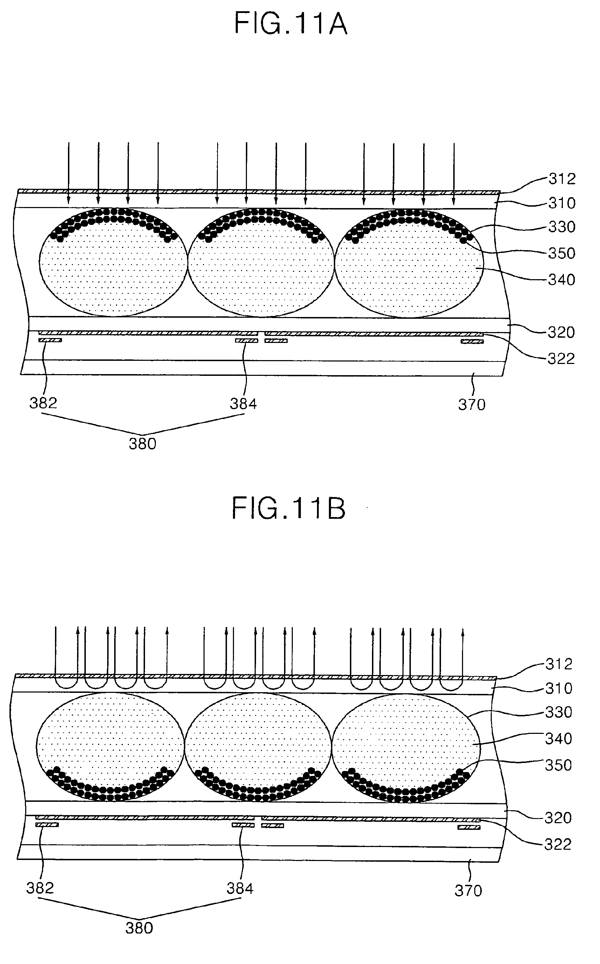

In the reflective display mode, if the non-white colored charged particles 350 are attracted to the first electrode 312, the non-white colored charged particles 350 are arranged right below the firs substrate 310 as shown in FIG. 11A. Accordingly, the incident light is reflected by the non-white colored charged particles 350, resulting in appearance of non-white color.

In order to present the white color, the non-white colored charged particles 350 are moved to the second substrate 320, as shown in FIG. 11B, by applying a voltage having polarity opposite to that of the non-white colored charged particles 350 to the second transparent electrode 320.

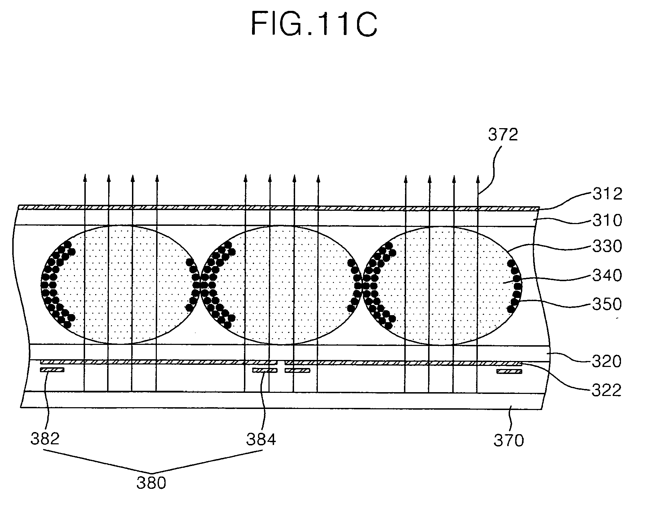

In the backlight display mode, white color can be appeared by allowing the light emitted from the backlight unit 370 to pass through the first and second substrates 310 and 320. In this embodiment, as shown in FIG. 11C, the non-white colored charged particles 350 are moved to the sidewalls of the capsules 330 by the electric field formed by the first and second backlight mode electrodes 382 and 384 such that the light emitted from the backlight unit 370 makes it possible to present white color.

The backlight mode driving unit 370 is identical with that of the third embodiment in structure and function, detailed description of the backlight mode driving unit 370 is omitted.

As described above, the electrophoretic display device of the present invention advantageously displays an image even in a dark ambient light environment because it is possible to provide light using a backlight mechanism.

Also, the electrophoretic display device of the present invention is advantageous in that it can be operated in a dual mode adaptive to the ambient light environment.

Also, the electrophoretic display device of the present invention is advantageous since a backlight display mode can be implemented with a minimum change of the device structure.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention.

## Claims

1. An electrophoretic display device comprising:
a first substrate having a first electrode, the first substrate and the first electrode being transparent;
a second substrate facing the first substrate and having a second electrode, the second substrate and the second electrode being transparent;
a pair of spacers interposed between the first and second substrates for defining a cell;
an insulation fluid filling the cell;
first colored charged particles dispersed in the insulation fluid, the first colored charged particles having a predetermined polarity;
second colored charged particles dispersed in the insulation fluid, the second colored charged particles having a polarity opposing the polarity of the first colored charged particles;
a backlight unit installed at an exterior side of the second substrate for emitting light to the second substrate; and
a backlight mode driving unit for attracting the first colored charged particles and the second colored charged particles to the spacers in opposite directions, respectively when the backlight unit turns on.

2. The electrophoretic display device of claim 1, wherein the backlight mode driving unit includes:
a first backlight mode electrode formed on an inner wall of one of the spacers; and
a second backlight mode electrode formed on an inner wall of the other spacer,
wherein the first and second backlight mode electrodes are supplied with voltages having opposite polarities to each other when the backlight unit turns on and are released from the voltages having opposite polarities to each other when the backlight unit is deactivated.

3. The electrophoretic display device of claim 1, wherein the backlight mode driving unit includes:
a first backlight mode electrode arranged at one end of a first spacer; and
a second backlight mode electrode arranged at one end of a second spacer, wherein the first and second backlight mode electrodes are supplied with voltages having opposite polarities to each other.

4. The electrophoretic display device of claim 3, wherein the first backlight mode electrode is arranged near one end of the second electrode and the second backlight mode electrode is arranged near the other end of the second electrode.

5. The electrophoretic display device of claim 4, wherein the first and second backlight mode electrodes are supplied with voltages having the same polarity when the backlight unit is deactivated.

6. The electrophoretic display device of claim 3, wherein the first and second backlight mode electrodes are arranged horizontally in parallel with the second electrode and overlap both ends of the second electrode, respectively.

7. The electrophoretic display device of claim 1, wherein the spacers comprise a transparent material.

8. The electrophoretic display device of claim 1, further includes light blocking members formed at areas where the first and second substrates contact the spacers.

9. An electrophoretic display device comprising:
a first transparent substrate having a first transparent electrode;
a second transparent substrate having a second transparent electrode, the second transparent substrate facing the first transparent substrate;
a pair of spacers interposed between the first and second transparent substrates for defining a cell;
first colored insulation fluid filling the cell;
second colored charged particles dispersed in the insulation fluid, the second-colored charged particles having a predetermined polarity;
a backlight unit installed at an exterior side of the second substrate for emitting light to the second transparent substrate; and
a backlight mode driving unit for attracting the second colored charged particles to the spacers when the backlight unit turns on.

10. The electrophoretic display device of claim 9, wherein the backlight mode driving unit includes:
a first backlight mode electrode formed on an inner wall of one of the spacers; and
a second backlight mode electrode formed on an inner wall of the other spacer,
wherein the first and second backlight mode electrodes are supplied with voltages having opposite polarities to each other when the backlight unit turns on and are released from the voltages having opposite polarities to each other when the backlight unit is deactivated.

11. The electrophoretic display device of claim 9, wherein the backlight mode driving unit includes:
a first backlight mode electrode arranged at one end of a first spacer; and
a second backlight mode electrode arranged at one end of a second spacer, wherein the first and second backlight mode electrodes are supplied with voltages having opposite polarities to each other.

12. The electrophoretic display device of claim 11, wherein the first backlight mode electrode is arranged near one end of the second electrode and the second backlight mode electrode is arranged near the other end of the second electrode.

13. The electrophoretic display device of claim 12, wherein the first and second backlight mode electrodes are supplied with voltages having identical polarity when the backlight unit is deactivated.

14. The electrophoretic display device of claim 11, wherein the first and second backlight mode electrodes are arranged horizontally in parallel with the second electrode and overlap both ends of the second electrode, respectively.

15. The electrophoretic display device of claim 9, wherein the spacers comprise a transparent material.

16. The electrophoretic display device of claim 9, further includes light blocking members formed at areas where the first and second substrates contact the spacers.

17. An electrophoretic display device comprising:
a first transparent substrate having a first transparent electrode;
a second transparent substrate having a second transparent electrode, the second transparent substrate facing the first transparent substrate;
a plurality of capsules arranged between the first and second transparent substrates;
insulation fluid filling the capsules;
first colored charged particles having a predetermined polarity and dispersed in the insulation fluid;
second colored charged particles having a polarity opposing the polarity of the first colored charged particles and dispersed in the insulation fluid;
a backlight unit installed at an exterior side of the second substrate for emitting light to the second substrate; and
a backlight mode driving unit for attracting the first colored charged particles and the second colored charged particles to the spacers in opposite directions, respectively when the backlight unit turns on.

18. The electrophoretic display device of claim 17, wherein the backlight mode driving unit includes:
a first backlight mode electrode formed at an exterior side of one of the first and second substrates; and
a second backlight mode electrode formed at regular intervals on a same horizontal line with the first backlight mode electrode, wherein the first and second backlight mode electrodes are supplied with voltages having opposite polarities to each other.

19. The electrophoretic display device of claim 18, wherein the first backlight mode electrode is arranged near one end of the second transparent electrode and the second backlight mode electrode is arranged near the other end of the second transparent electrode.

20. The electrophoretic display device of claim 19, wherein the first and second backlight mode electrodes are released from the voltages having opposite polarities to each other when the backlight unit is deactivated.

21. The electrophoretic display device of claim 19, wherein the first and second backlight mode electrodes are supplied with voltages having identical polarity when the backlight unit is deactivated.

22. The electrophoretic display device of claim 18, wherein the first and second backlight mode electrodes are arranged horizontally in parallel with the second electrode and overlap both ends of the second electrode, respectively.

23. An electrophoretic display device comprising:
a first transparent substrate having a first transparent electrode;
a second transparent substrate having a second transparent electrode, the second transparent substrate facing the first transparent substrate;
a plurality of capsules arranged between the first and second transparent substrates;
first colored insulation fluid filling the capsules;
second colored charged particles having a predetermined polarity and dispersed in the insulation fluid;
a backlight unit installed at exterior side of the second substrate for emitting light to the second substrate; and
a backlight mode driving unit for attracting the second colored charged particles to both sides of the capsules, when the backlight unit turns on.

24. The electrophoretic display device of claim23, wherein the backlight mode driving unit includes:
a first backlight mode electrode formed at an exterior side of one of the first and second transparent substrates; and
a second backlight mode electrode formed at regular intervals on a same horizontal line with the first backlight mode electrode,
wherein the first and second backlight mode electrodes are supplied with voltages having opposite polarities to each other.

25. The electrophoretic display device of claim 24, wherein the first electrode is arranged near an end of the second transparent electrode and the second backlight mode electrode is arranged near another end of the second transparent electrode.

26. The electrophoretic display device of claim 24, wherein the first and second backlight mode electrodes are released from the voltages having opposite polarities to each other when the backlight unit is deactivated.

27. The electrophoretic display device of claim 25, wherein the first and second backlight mode electrodes are supplied with voltages having identical polarity when the backlight unit is deactivated.

28. The electrophoretic display device of claim 24, wherein the first and second backlight mode electrodes are arranged horizontally in parallel with the second electrode and overlap both ends of the second electrode, respectively.
